# DEMANDE DE BREVET EUROPEEN

(11) **EP 1 914 123 A1**
(43) Date de publication de la demande: **23.04.2008**
(21) Numéro de dépôt: 07118608.4
(22) Date de dépôt: 16.10.2007
(51) Int. Cl.: B60R 21/08, B60R 5/04

(54) **Dispositif de séparation à déploiement et maintien automatique, et véhicule automobile correspondant**

(30) Priorité: 18.10.2006 FR 0609143
(71) Demandeur: WAGON SAS, 79302 Bressuire Cédex (FR)
(72) Inventeur: Fourel, Pascal, 35400 Saint-Malo (FR)
(74) Mandataire: Bioret, Ludovic

(57) **Abrégé**

L'invention concerne un dispositif de séparation pour véhicule automobile, comprenant une cassette (10) logeant un tube enrouleur auquel est liée une extrémité d'un élément de séparation (11) mobile entre une position repliée et au moins une position de séparation, l'extrémité libre dudit élément d'occultation (11) étant liée à une barre de tirage (12) dont chacune des extrémités est liée à ladite cassette (10) au moyen d'une biellette (13,14), lesdites biellettes (13,14) étant mobiles entre une position escamotée dans laquelle elles sont sensiblement dissimulées à l'intérieur de ladite cassette (10), et au moins une position déployée.
Selon l'invention, un tel dispositif d'occultation comprend des moyens de verrouillage et/ou de libération (41) permettant de maintenir ledit élément de séparation (11) dans ladite position repliée et/ou de le libérer, et des moyens d'entraînement assurant le passage automatique dudit élément de séparation (11) de ladite position repliée à au moins une desdites positions de séparation (11).

## Description

### 1. Domaine de l'invention

Le domaine de l'invention est celui des équipements intérieurs de véhicules automobiles.

Plus précisément, l'invention concerne les dispositifs de séparation du coffre et de l'habitacle d'un véhicule, appelés filets de séparation ou encore filets « stop charge », permettant, par exemple, d'empêcher que des objets contenus dans le coffre ne passent dans l'habitacle au cours de leur transport.

### 2. Art antérieur

De nombreux véhicules, en particuliers les véhicules dotés d'un hayon, les véhicules de type break ou de type 4x4, sont équipés de tels dispositifs de séparation.

Classiquement, ces dispositifs de séparation comprennent une cassette, placée au dos des sièges arrière, logeant un tube enrouleur auquel est liée une extrémité d'un filet de séparation. Ce filet est mobile entre une position repliée dans laquelle il est enroulé autour du tube enrouleur, et une position où il est déployé, encore appelée position de séparation, dans laquelle il sépare le coffre de l'habitacle d'un véhicule. Un ressort de rappel, solidaire du tube enrouleur, tend à maintenir le filet en position repliée. L'extrémité libre du filet est solidaire d'une barre de tirage sur laquelle agit un utilisateur de façon à déployer et replier le filet.

Le maintien du filet en position déployée se fait en engageant des moyens d'ancrage prévus à chaque extrémité de la barre de tirage dans des logements prévus à cet effet, par exemple sur les côtés du pavillon.

Selon cette approche, lorsque le filet est replié, l'utilisateur pour le déployer doit saisir la barre de tirage qui se trouve au niveau de la cassette, c'est-à-dire dans le coffre, au dos des sièges arrière. Il est particulièrement malaisé de se pencher par-dessus les sièges arrière ou d'accéder par le coffre pour saisir la barre de tirage, notamment lorsque le coffre est long ou est chargé. Après avoir saisi la barre de tirage, l'utilisateur doit la déplacer, à bout de bras, vers le pavillon en s'opposant à la force exercée par le ressort de rappel. Finalement, afin de maintenir le filet en position de séparation, l'utilisateur doit engager, l'un après l'autre, chaque moyen d'ancrage des extrémités de la barre de tirage dans les logements prévus à cet effet dans le véhicule.

Le déploiement d'un tel filet de séparation est donc une opération inconfortable pour l'utilisateur, particulièrement pour les utilisateurs de petite taille ou les utilisateurs ayant des difficultés à se pencher.

Ces techniques de l'art antérieur se révèlent donc être délicates à manoeuvrer et peu ergonomiques.

### 3. Objectifs de l'invention

L'invention a notamment pour objectif de pallier ces inconvénients de l'art antérieur.

Plus précisément, un objectif de l'invention est de fournir une telle technique qui permette de faciliter le déploiement d'un dispositif de séparation pour véhicule automobile.

Un autre objectif de l'invention est de mettre en oeuvre une telle technique qui permette de faciliter le maintien du dispositif de séparation en position déployée.

L'invention poursuit également l'objectif de fournir une telle technique qui présente de bonnes qualités tant sur un plan ergonomique que sur un plan esthétique.

L'invention a encore pour objectif de proposer une telle technique qui soit fiable, simple à mettre en oeuvre et qui soit peu coûteuse.

### 4. Exposé de l'invention

Ces objectifs, ainsi que d'autres qui apparaîtront par la suite, sont atteints à l'aide d'un dispositif de séparation pour véhicule automobile, comprenant une cassette logeant un tube enrouleur auquel est liée une extrémité d'un élément de séparation mobile entre une position repliée et au moins une position de séparation, l'extrémité libre dudit élément d'occultation étant liée à une barre de tirage dont chacune des extrémités est liée à ladite cassette au moyen d'une biellette, lesdites biellettes étant mobiles entre une position escamotée dans laquelle elles sont sensiblement dissimulées à l'intérieur de ladite cassette, et au moins une position déployée.

Selon l'invention, un tel dispositif d'occultation comprend des moyens de verrouillage et/ou de libération permettant de maintenir ledit élément de séparation dans ladite position repliée et/de le libérer, et des moyens d'entraînement assurant le passage automatique dudit élément de séparation de ladite position repliée à au moins une desdites positions de séparation.

Ainsi, l'invention repose sur une approche tout à fait nouvelle et inventive du déploiement d'un dispositif de séparation, comme un filet « stop charge », consistant à déclencher le déploiement automatique du filet par simple action sur une manette de déverrouillage placée au niveau de la cassette du dispositif de séparation ou bien placée de façon déportée par rapport à la cassette dans une zone facilement accessible par un utilisateur.

Cette approche permet donc à un utilisateur de déployer, aisément et de façon très simple, un filet de séparation.

Avantageusement, le dispositif de séparation selon l'invention comprend des moyens de rappel agissant sur lesdites biellettes et qui tendent à les placer dans lesdites positions déployées.

Cette approche permet de déployer et de maintenir déployé simplement et efficacement l'élément de séparation.

Préférentiellement, lesdits moyens de rappel sont des ressorts spiraux reliés aux extrémités inférieures desdites biellettes et à ladite cassette.

De tels ressorts présentent notamment l'avantage d'être efficaces et simples à mettre en oeuvre.

Selon une caractéristiques avantageuse de l'invention, chaque extrémité de ladite barre de tirage est liée à une desdites biellettes au moyen d'une liaison glissière.

Ceci permet de maintenir la barre de tirage à l'aplomb au cours du déploiement et du repli de l'élément de séparation.

Préférentiellement, lesdites biellettes présentent au moins une zone de guidage des extrémités de ladite barre de tirage.

Ceci permet notamment de faciliter le déploiement et le repli de l'élément de séparation.

Avantageusement, chacune desdites extrémités de ladite barre de tirage présente un doigt destiné à coopérer avec une desdites zones de guidage.

Cette approche permet d'assurer un guidage efficace de la barre de tirage, et de faciliter le déploiement et le repli de l'élément de séparation.

Selon une caractéristique préférée de l'invention, lesdites biellettes comprennent des premiers moyens d'ancrage destinés à coopérer, en position totalement déployée, avec des seconds moyens d'ancrage prévus à cet effet sur chacun des bords latéraux du pavillon dudit véhicule.

L'élément de séparation peut ainsi être automatiquement maintenu en position dès qu'il est totalement déployé. Ceci permet également d'assurer un maintien efficace et sûr.

Préférentiellement, lesdits moyens de verrouillage et/ou de libération coopèrent avec ladite barre de tirage dans ladite position escamotée.

Cette approche permet d'assurer simplement et efficacement le verrouillage et la libération de l'élément de séparation sans nécessiter la mise en oeuvre de moyens coûteux.

Avantageusement, lesdits moyens d'entraînement comprennent des moyens d'actionnement agissant sur lesdits moyens de verrouillage et/ou de libération.

De tels moyens d'actionnement permettent à un utilisateur de manipuler simplement le dispositif selon l'invention de façon à obtenir le déploiement de l'élément d'occultation, ainsi que son verrouillage.

De façon préférée, lesdits moyens d'actionnement sont portés par ladite cassette, sensiblement au milieu de ladite cassette.

Cette approche permet de faciliter à un utilisateur la manipulation d'un dispositif selon l'invention.

Avantageusement, lesdits moyens d'actionnement sont déportés de ladite cassette.

Les moyens d'actionnement peuvent ainsi être placés dans une zone facilement accessible par un utilisateur, par exemple l'arrière du coffre, de façon à faciliter l'utilisation du dispositif selon l'invention. Ceci lui confère notamment de bonnes qualités ergonomiques.

Selon un mode de réalisation particulier, ledit élément de séparation est un filet de séparation d'un habitacle et d'une zone de chargement dudit véhicule.

Le dispositif selon l'invention peut ainsi prévenir le passage dans l'habitacle d'objets contenus dans un coffre, et ainsi améliorer la sécurité des passagers.

Selon un autre mode de réalisation avantageux, ledit élément de séparation est une toile d'occultation.

Le dispositif selon l'invention peut ainsi permettre d'occulter une surface vitrée d'un véhicule, par exemple pour se protéger du soleil.

L'invention concerne également un véhicule automobile équipé d'un dispositif de séparation selon l'invention.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente, vue depuis l'intérieur de l'habitacle d'un véhicule, un exemple de dispositif de séparation selon l'invention dans une position de séparation où le filet de séparation est totalement déployé ;
- la figure 2 illustre le dispositif de séparation présenté à la figure 1, dans une position de séparation intermédiaire ;
- la figure 3 est une vue de détail illustrant la mise en oeuvre de moyen de rappel au niveau des biellettes du dispositif selon l'invention ;
- les figures 4a, 4b, 4c illustrent le dispositif de séparation présenté aux figures précédentes respectivement en position repliée, dans une position de séparation intermédiaire, et dans une position de séparation où le filet de séparation est totalement déployé;
- la figure 5 est une vue de détail d'un exemple de mise en oeuvre de moyens de verrouillage et/ou libération et de moyens d'entraînement selon l'invention.

### 6. Description d'un mode de réalisation de l'invention

### 6.1. Principe de l'invention

Le principe général de l'invention repose sur la mise en oeuvre de moyens d'entraînement qui, par simple action, par exemple sur une manette placée au niveau de la cassette ou déportée dans une zone facilement accessible par un utilisateur, permettent de déployer automatiquement le filet d'un dispositif de séparation.

### 6.2. Structure générale d'un exemple de dispositif de séparation selon l'invention

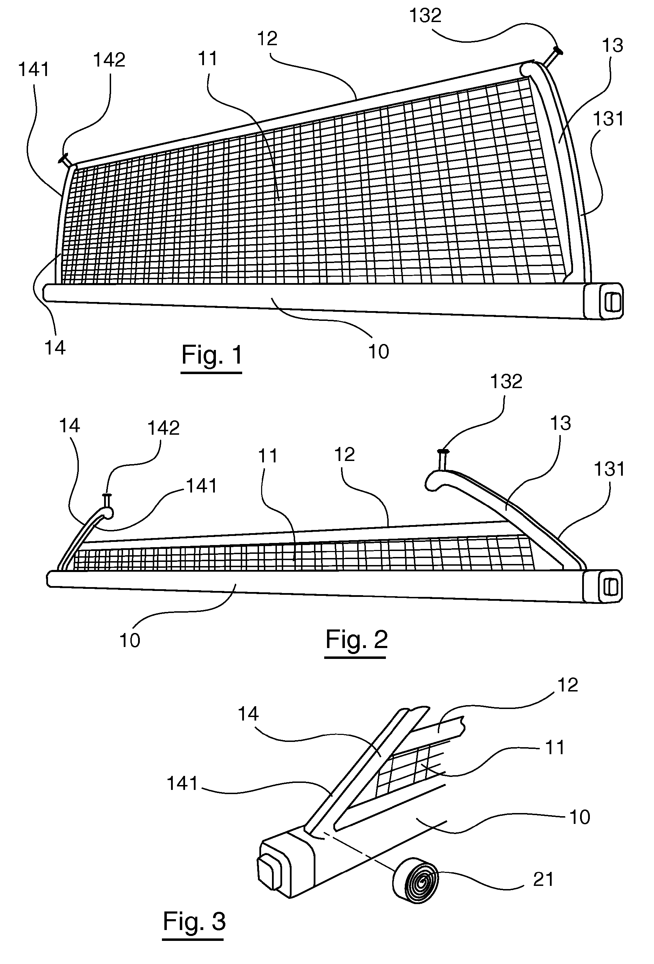

On présente, en relation avec les figures 1 à 3, un mode de réalisation d'un dispositif de séparation selon l'invention. On note que la figure 1 illustre une vue, depuis l'intérieur d'un véhicule, d'un dispositif de séparation selon l'invention, dans une position de séparation où le filet de séparation 11 est totalement déployé. La figure 2 illustre de dispositif de séparation de la figure 1 dans une position de séparation intermédiaire.

Le dispositif de séparation selon l'invention comprend une cassette 10 logeant un tube enrouleur (non représenté) auquel est liée une extrémité d'un filet de séparation 11. Une barre de tirage 12 est reliée à l'extrémité libre du filet 11.

Deux biellettes 13 et 14 relient chaque extrémité de la barre de tirage 12 à la cassette 10.

Les biellettes 13 et 14 sont chacune liées par leur extrémité inférieure à la cassette 10 au moyen d'une liaison pivot d'axe perpendiculaire à l'axe principal de la cassette 10. Ces biellettes 13, 14 sont donc mobiles entre une position escamotée dans laquelle elles sont sensiblement dissimulées à l'intérieur de la cassette 10, et au moins une position déployée dans laquelle elles pivotent autour de leurs liaisons pivot respectives et s'étendent en dehors de la cassette 10.

Des moyens de rappel, prenant ici la forme de ressorts spiraux 21, sont liés à chaque extrémité inférieure des biellettes 13, 14 et à la cassette 10. Ces ressorts spiraux 21 agissent sur les biellettes 13, 14 et tendent à les placer en position déployée.

Les biellettes 13, 14 présentent en outre une portion de guidage 131, 141 destinée à guider la barre de tirage 12, tel que cela va être explicité ci-après.

Chaque extrémité de la barre de tirage 12 présente un doigt (non représenté) destiné à coopérer avec l'une des zones de guidage 131, 141 formées dans les biellettes 13, 14.

Les extrémités de la barre de tirage 12 sont ainsi liées aux biellettes 13, 14 au moyen de deux liaisons glissières de façon que les extrémités de la barre de tirage 12 puissent coulisser le long des biellettes 13, 14. La forme des biellettes 13, 14 et par suite des deux liaisons glissières est prévue pour que, lors du déploiement des biellettes, les extrémités de la barre de tirage restent constamment sensiblement à l'aplomb de la position qu'elles occupent dans la position repliée. La forme des biellettes qui s'apparente à un galbe, comme le révèlent les figures 1 et 2, peut correspondre par exemple à celle d'une cycloïde.

Les biellettes 13, 14 comprennent à leur extrémité supérieure des premiers moyens d'ancrage, prenant ici la forme de crochets 132, 142. Ces crochets 132, 142 sont destinés à coopérer, lorsque le filet 11 est déployé en position de séparation, avec des seconds moyens d'ancrage, par exemple des logements de forme complémentaire, fixés ou ménagés dans les parois intérieures du véhicule, proches du pavillon. Ces premiers et seconds moyens d'ancrage permettent de maintenir les biellettes 13, 14, la barre de tirage 12, et le filet 11 en positions déployée et de séparation respectivement.

On note que les biellettes 13, 14 sont préférentiellement réalisées dans un matériau présentant de bonnes caractéristiques mécaniques de façon à assurer une bonne rigidité de l'ensemble. Il pourra s'agir d'un acier, d'un alliage d'aluminium ou de tout autre matériau, par exemple plastique, adapté.

### 6.3. Moyens de verrouillage et moyens de libération

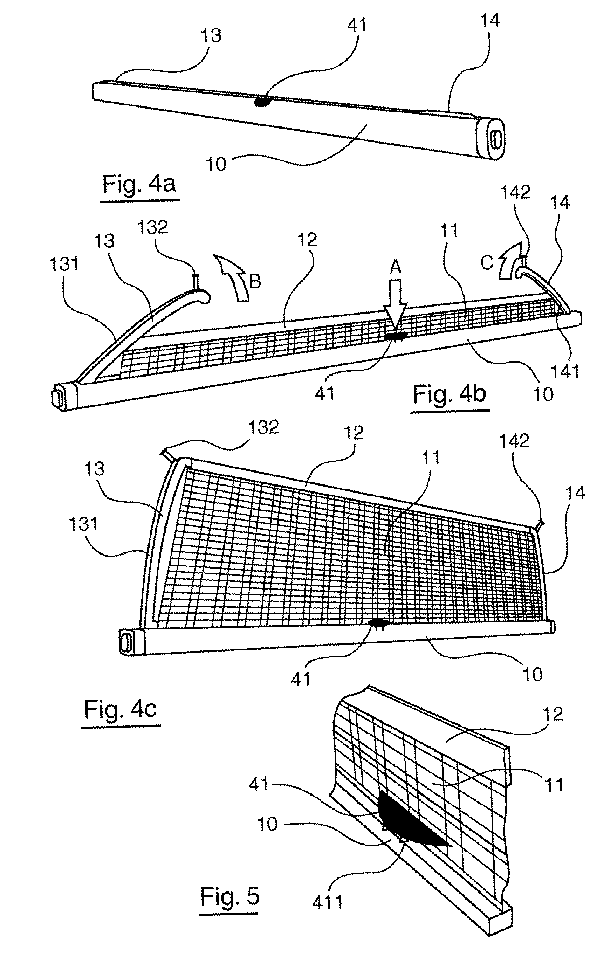

Les figures 4a, 4b, 4c et 5 présentent plusieurs vues depuis l'intérieur d'un véhicule du dispositif de séparation selon l'invention.

Tel que cela apparaît, le dispositif selon l'invention comprend une manette 41. Cette manette 41 est placée sensiblement au milieu de la cassette 10.

La manette 41 constitue ici un moyen de verrouillage et un moyen de libération. En effet, la manette 41 présente une portion supérieure 411, qui, lorsque le filet 11 est en position repliée, vient recouvrir en partie la barre de tirage 12 de sorte que celle-ci ne peut être déplacée dans le sens de déploiement du filet 11.

La manette 41 est conçue et solidarisée à la cassette 10 de telle sorte que, lorsqu'un utilisateur appuie sur cette manette, elle se déplace (par exemple en se soulevant ou se décalant) et libère la barre de tirage 12, et lorsque le filet est en position repliée, elle se déplace pour venir recouvrir en partie la barre de tirage 12.

La manette peut être réalisée dans un matériau plastique et obtenue par exemple par injection. Tout autre matériau et mode d'obtention peuvent bien sûr être mis en oeuvre.

D'autres modes de verrouillage et de libération peuvent également être mis en oeuvre.

Dans une variante de ce mode de réalisation, des moyens de commande déportés, par exemple au niveau de l'entrée du coffre ou bien à l'intérieur de l'habitacle du véhicule, permettent d'actionner à distance la manette 41 de façon à libérer la barre de tirage 12.

### 6.4. Déploiement du filet

On présente, en relation avec les figures 4a à 4c, le déploiement d'un dispositif de séparation selon l'invention.

Lorsque le filet 11 est en position repliée, les biellettes 13, 14 sont en position escamotée et sont sensiblement dissimulées à l'intérieur de la cassette 10 (figure 4a). Dans une variante de ce mode de réalisation, on peut également envisager que les biellettes soient dissimulées le long de la cassette. La manette 41 recouvre en partie la barre de tirage 12 de sorte que celle-ci ne peut être déplacée dans le sens de déploiement du filet 11. Les biellettes 13, 14 sont alors maintenues en position escamotée, et le filet 11 est maintenu en position repliée.

De façon à déployer le filet 11 afin de séparer le coffre de l'habitacle, un utilisateur appuie (flèche A) sur la manette 41. La manette se déplace et ne recouvre plus la barre de tirage 12. Celle-ci est donc libérée et peut être translatée dans le sens de déploiement du filet 11.

Sous l'effet de l'effort exercé par chaque ressort spiral 21, les biellettes 13, 14 pivotent chacune autour d'un axe perpendiculaire à l'axe de la cassette, respectivement selon la flèche B et C. Au cours du pivotement des biellettes 13, 14, les extrémités de la barre de tirage 12 sont entraînées par les biellettes et coulissent progressivement le long des portions de guidage 131, 141. La barre de tirage 12, guidée par les biellettes 13, 14, est donc translatée dans le sens de déploiement du filet 11.

Durant son déplacement, la barre de tirage 12 tire sur le filet 11 qui se déploie en dehors de la cassette 10. Au cours de son déploiement, le filet 11 est maintenu tendu sous l'effet du ressort de rappel solidaire du tube enrouleur.

En fin de déploiement, les crochets 132, 142 solidaires des biellettes pénètrent progressivement dans les logements de forme complémentaire prévus dans les parois du véhicule au niveau du pavillon de sorte que, lorsque les biellettes 13, 14 sont en position totalement déployée, et donc que le filet 11 occupe sa position de séparation (ou d'obturation), les biellettes 13, 14, la barre de tirage 12 et le filet 11 sont déployés et maintenus en position de séparation.

L'encliquetage automatique des crochets dans les logements de forme complémentaire permet ainsi d'assurer un bon maintien du filet en position de séparation de façon systématique lorsque les biellettes arrivent en fin de déploiement. Des moyens de motorisation peuvent être mis en oeuvre pour assister l'encliquetage automatique.

Des moyens de motorisation peuvent être mis en oeuvre de façon à assurer, ou à tous le moins assister le déploiement du filet, et la mise en position des biellettes.

Avantageusement, les biellettes 13, 14 permettent un recouvrement complémentaire des zones non protégées qui s'entendent au-delà des bords latéraux du filet 11.

La technique selon l'invention permet donc, par un simple appui sur une manette placée au niveau de la cassette ou bien déportée à l'entrée du coffre ou à l'intérieur de l'habitacle, la réalisation de deux actions :
- déploiement automatique du filet de séparation de façon à séparer le coffre et l'habitacle d'un véhicule ;
- maintien automatique du dispositif en position de séparation par engagement de premiers moyens d'ancrage solidaires des biellettes dans de seconds moyens d'ancrage, de forme complémentaire, prévus dans les parois du véhicule au niveau du pavillon.

La technique selon l'invention permet ainsi d'améliorer considérablement l'ergonomie d'usage d'un dispositif de séparation.

### 6.5. Repli du filet

Afin de replier le filet 11, un utilisateur désolidarise les crochets 132, 142 des logements prévus dans le véhicule, puis appuie sur la barre de tirage 12 de façon à contrer l'effort imprimé par les ressorts spiraux 21 sur les biellettes 13, 14, et à déplacer la barre de tirage 12 dans un sens opposé au sens de déploiement du filet 11. Le filet 11 se replie progressivement sur le tube enrouleur et reste tendu sous l'effet du ressort de rappel solidaire de ce dernier.

Lorsque la barre de tirage 12 arrive en regard de la cassette 10, la manette 41 recouvre automatiquement une portion de la barre de tirage 12 de façon à verrouiller de dispositif de séparation en position repliée.

Dans un mode de réalisation particulier de l'invention, il peut également être envisagé de mettre en oeuvre des moyens motorisés, éventuellement actionnés par l'intermédiaire d'une commande déportée, pour replier automatiquement le filet de séparation.

### 6.6. Autre application

Le mode de réalisation décrit plus haut s'applique à un filet de séparation classiquement déployé derrière la banquette arrière d'un véhicule de façon à séparer le coffre et l'habitacle d'un véhicule et à empêcher le passage d'objets stockés dans le coffre, du coffre vers l'habitacle, au cours de leur transport.

La technique selon l'invention peut également être mise en oeuvre afin de permettre un déploiement et/ou un repliement, et un maintien en position d'obturation automatiques d'un store d'occultation permettant par exemple de se protéger des rayons du soleil, moyennant la manipulation d'un simple organe de commande placé au niveau de la cassette ou bien déporté dans une zone du véhicule facilement accessible par un utilisateur.

## Revendications

1. Dispositif de séparation pour véhicule automobile, comprenant une cassette (10) logeant un tube enrouleur auquel est liée une extrémité d'un élément de séparation (11) mobile entre une position repliée et au moins une position de séparation, l'extrémité libre dudit élément de séparation (11) étant liée à une barre de tirage (12) dont chacune des extrémités est liée à ladite cassette (10) au moyen d'une biellette (13, 14), lesdites biellettes (13, 14) étant mobiles entre une position escamotée dans laquelle elles sont sensiblement dissimulées à l'intérieur de ladite cassette (10), et au moins une position déployée,
**caractérisé en ce que** ledit dispositif d'occultation comprend des moyens de verrouillage et/ou de libération permettant de maintenir ledit élément de séparation (11) dans ladite position repliée et/ou de le libérer, et des moyens d'entraînement assurant le passage automatique dudit élément de séparation (11) de ladite position repliée à au moins une desdites positions de séparation.

2. Dispositif de séparation selon la revendication 1, **caractérisé en ce que** qu'il comprend des moyens de rappel agissant sur lesdites biellettes (13, 14) et qui tendent à les placer dans lesdites positions déployées.

3. Dispositif selon la revendication 2, **caractérisé en ce que** lesdits moyens de rappel sont des ressorts spiraux (21) reliés aux extrémités inférieures desdites biellettes (13, 14) et à ladite cassette (10).

4. Dispositif selon l'une quelconque des revendications 1 à 3, **caractérisé en ce que** chaque extrémité de ladite barre de tirage (12) est liée à une desdites biellettes (13, 14) au moyen d'une liaison glissière.

5. Dispositif selon l'une quelconque des revendications 1 à 4, **caractérisé en ce que** lesdites biellettes (13, 14) présentent au moins une zone de guidage (131, 141) des extrémités de ladite barre de tirage (12).

6. Dispositif selon la revendication 5, **caractérisé en ce que** chacune desdites extrémités de ladite barre de tirage (12) présente un doigt destiné à coopérer avec une desdites zones de guidage (131, 141).

7. Dispositif selon l'une quelconque des revendications 1 à 6, **caractérisé en ce que** lesdites biellettes (13, 14) comprennent des premiers moyens d'ancrage (132, 142) destinés à coopérer, en position totalement déployée, avec des seconds moyens d'ancrage prévus à cet effet sur chacun des bords latéraux du pavillon dudit véhicule.

8. Dispositif selon l'une quelconque des revendications 1 à 7, **caractérisé en ce que** lesdits moyens de verrouillage et/ou de libération coopèrent avec ladite barre de tirage (12) dans ladite position escamotée.

9. Dispositif selon l'une quelconque des revendications 1 à 8, **caractérisé en ce que** lesdits moyens d'entraînement comprennent des moyens d'actionnement (41) agissant sur lesdits moyens de verrouillage et/ou de libération.

10. Dispositif selon la revendication 9, **caractérisé en ce que** lesdits moyens d'actionnement sont portés par ladite cassette (10), sensiblement au milieu de ladite cassette (10).

11. Dispositif selon la revendication 9, **caractérisé en ce que** lesdits moyens d'actionnement sont déportés de ladite cassette (10).

12. Dispositif selon l'une quelconque des revendications 1 à 11, **caractérisé en ce que** ledit élément de séparation (11) est un filet de séparation d'un habitacle et d'une zone de chargement dudit véhicule.

13. Dispositif selon l'une quelconque des revendications 1 à 11, **caractérisé en ce que** ledit élément de séparation (11) est une toile d'occultation.

14. Véhicule automobile, **caractérisé en ce qu'**il comprend un dispositif de séparation selon l'une quelconque des revendications 1 à 13.

## Revendications modifiées

### Revendications modifiées conformément à la règle 137(2) CBE.

**1.** Dispositif de séparation pour véhicule automobile, comprenant une cassette (10) logeant un tube enrouleur auquel est liée une extrémité d'un élément de séparation (11) mobile entre une position repliée et au moins une position de séparation, l'extrémité libre dudit élément de séparation (11) étant liée à une barre de tirage (12) dont chacune des extrémités est liée à ladite cassette (10) au moyen d'une biellette (13, 14), lesdites biellettes (13, 14) étant mobiles entre une position escamotée dans laquelle elles sont sensiblement dissimulées à l'intérieur de ladite cassette (10), et au moins une position déployée,
**caractérisé en ce que** ledit dispositif d'occultation comprend des moyens de verrouillage permettant de maintenir ledit élément de séparation (11) dans ladite position repliée et/ou des moyens de libération permettant de le libérer, et des moyens d'entraînement assurant le passage automatique dudit élément de séparation (11) de ladite position repliée à au moins une desdites positions de séparation.

**2.** Dispositif de séparation selon la revendication 1, **caractérisé en ce que** qu'il comprend des moyens de rappel agissant sur lesdites biellettes (13, 14) et qui tendent à les placer dans lesdites positions déployées.

**3.** Dispositif selon la revendication 2, **caractérisé en ce que** lesdits moyens de rappel sont des ressorts spiraux (21) reliés aux extrémités inférieures desdites biellettes (13, 14) et à ladite cassette (10).

**4.** Dispositif selon l'une quelconque des revendications 1 à 3, **caractérisé en ce que** chaque extrémité de ladite barre de tirage (12) est liée à une desdites biellettes (13, 14) au moyen d'une liaison glissière.

**5.** Dispositif selon l'une quelconque des revendications 1 à 4, **caractérisé en ce que** lesdites biellettes (13, 14) présentent au moins une zone de guidage (131, 141) des extrémités de ladite barre de tirage (12).

**6.** Dispositif selon la revendication 5, **caractérisé en ce que** chacune desdites extrémités de ladite barre de tirage (12) présente un doigt destiné à coopérer avec une desdites zones de guidage (131, 141).

**7.** Dispositif selon l'une quelconque des revendications 1 à 6, **caractérisé en ce que** lesdites biellettes (13, 14) comprennent des premiers moyens d'ancrage (132, 142) destinés à coopérer, en position totalement déployée, avec des seconds moyens d'ancrage prévus à cet effet sur chacun des bords latéraux du pavillon dudit véhicule.

**8.** Dispositif selon l'une quelconque des revendications 1 à 7, **caractérisé en ce que** lesdits moyens de verrouillage et/ou de libération coopèrent avec ladite barre de tirage (12) dans ladite position escamotée.

**9.** Dispositif selon l'une quelconque des revendications 1 à 8, **caractérisé en ce que** lesdits moyens d'entraînement comprennent des moyens d'actionnement (41) agissant sur lesdits moyens de verrouillage et/ou de libération.

**10.** Dispositif selon la revendication 9, **caractérisé en ce que** lesdits moyens d'actionnement sont portés par ladite cassette (10), sensiblement au milieu de ladite cassette (10).

**11.** Dispositif selon la revendication 9, **caractérisé en ce que** lesdits moyens d'actionnement sont déportés de ladite cassette (10).

**12.** Dispositif selon l'une quelconque des revendications 1 à 11, **caractérisé en ce que** ledit élément de séparation (11) est un filet de séparation d'un habitacle et d'une zone de chargement dudit véhicule.

**13.** Dispositif selon l'une quelconque des revendications 1 à 11, **caractérisé en ce que** ledit élément de séparation (11) est une toile d'occultation.

**14.** Véhicule automobile, **caractérisé en ce qu'**il comprend un dispositif de séparation selon l'une quelconque des revendications 1 à 13.
